# EUROPÄISCHE PATENTSCHRIFT

(11) **EP 3 737 599 B1**
(45) Veröffentlichungstag und Bekanntmachung des Hinweises auf die Patenterteilung: **01.12.2021**
(21) Anmeldenummer: 19707273.9
(22) Anmeldetag: 08.02.2019
(51) Int. Cl.: B61D 27/00, B60H 1/00, B60H 1/24

(54) **FAHRZEUG MIT EINER KLIMAANORDNUNG**
VEHICLE HAVING AN AIR CONDITIONING ASSEMBLY
VÉHICULE ÉQUIPÉ D'UN SYSTÈME DE CLIMATISATION

(30) Priorität: 07.03.2018 DE 102018203428
(43) Veröffentlichungstag der Anmeldung: 18.11.2020
(73) Patentinhaber: Siemens Mobility GmbH, 81739 München (DE)
(72) Erfinder: CIFTCI, Behcet, 46117 Oberhausen (DE); KASAP, Irfan, 44653 Herne (DE); Plinninger, Thomas, 41352 Korschenbroich (DE)
(86) Internationale Anmeldenummer: PCT/EP2019/053142
(87) Internationale Veröffentlichungsnummer: WO 2019/170364

(56) Entgegenhaltungen:
- WO-A1-88/04240
- DD-A1- 236 496
- DE-A1-102014 214 581
- DE-B3-102007 014 406

## Beschreibung

Die Erfindung bezieht sich auf ein Fahrzeug mit einer Klimaanordnung nach dem Oberbegriff von Anspruch 1.

Danach umfasst die Klimaanordnung eines solchen Fahrzeugs ein Klimagerät, das konditionierte Zuluft für einen Fahrzeuginnenraum bereitstellt, einen horizontal in Längsrichtung des Fahrzeugs verlaufenden Luftkanal, eine strömungstechnisch mit einem Zuluftauslass des Klimagerätes verbundene und in einem Luftverteilabschnitt des Luftkanals vorgesehene Luftverteileinrichtung, welche die von dem Klimagerät bereitgestellte Zuluft derart in den Luftkanal umlenkt, dass in einem ersten Luftkanalabschnitt ein erster Anteil der Zuluft in eine erste Strömungsrichtung und in einem zweiten Luftkanalabschnitt ein zweiter Anteil der Zuluft, der hinsichtlich seines Volumens kleiner als der erste Anteil an Zuluft ist, in eine der ersten Strömungsrichtungen entgegengesetzte zweite Strömungsrichtung geführt ist, einen sich im Bereich der Luftverteileinrichtung unterhalb und längs des Luftkanals erstreckenden und mit dem Luftkanal über bodenseitige Öffnungen des Luftkanals strömungstechnisch verbundene Luftberuhigungsraum, der auf seiner Unterseite zu einem Fahrzeuginnenraum von einer luftdurchlässigen Innenraumdecke begrenzt ist und im Bereich des ersten Luftkanalabschnitts eine einzelne Umlenkeinrichtung angeordnet ist, welche einen Teil des ersten Anteils der Zuluft in Gegenrichtung derart umlenkt, dass der umgelenkte Teil des ersten Anteils der Zuluft in einem Luftberuhigungsraumabschnitt unterhalb der Luftverteileinrichtung entlang strömt. Eine solche Klimaanordnung ist aus der WO 88/04240 A1 bekannt.

Insbesondere bei einem entfernt von den Fahrzeugenden, beispielsweise zentral auf einem Fahrzeugdach angeordneten Klimagerät ist es erforderlich, die von dem Klimagerät bereitgestellte konditionierte Zuluft nach ihrem Eintritt von oben in den Luftkanal in zwei entgegengesetzte Richtungen längs des Fahrzeugs umzulenken. Zu diesem Zweck dient die Luftverteileinrichtung, die in dem Fall, wenn die Zuluft von oben von dem Klimagerät aus anströmt, etwa in einem Winkel von 90° in zwei entgegengesetzte Richtungen umlenkt, und zwar sowohl in den ersten Luftkanalabschnitt als auch in den zweiten Luftkanalabschnitt. Die von dem Luftkanal geführte Zuluft gelangt über einen unter dem Luftkanal liegenden Luftberuhigungsraum durch eine luftdurchlässige Innendecke des Fahrzeugs in den Fahrzeuginnenraum.

Dabei ist zu berücksichtigen, dass über die Fläche dieser Innendecke eine möglichst gleichmäßige Ausströmung der Zuluft von dem Luftberuhigungsraum in den Fahrgastinnenraum erreicht wird. Dies wird insbesondere durch zwei Eigenschaften der Klimaanordnung erschwert: Erstens ist in den meisten Fällen das von der Luftverteileinrichtung umgelenkte Luftvolumen zwischen dem ersten Luftkanalabschnitt und dem zweiten Luftkanalabschnitt unterschiedlich groß. Zweitens ist der Luftberuhigungsraumabschnitt unmittelbar unterhalb der Luftverteileinrichtung kritisch, da aufgrund der hohen Zuluftströmungsgeschwindigkeit ein unmittelbarer Luftaustritt durch die Innendecke in diesem Bereich nicht möglich ist.

Ausgehend hiervon liegt der Erfindung die Aufgabe zugrunde, ein Fahrzeug mit einer Klimaanordnung der eingangs genannten Art derart weiterzubilden, dass sich eine möglichst gleichmäßige Zuluftausströmung in den Fahrgastinnenraum auch im Bereich der Luftverteileinrichtung ergibt.

Diese Aufgabe wird bei dem vorstehend beschriebenen Fahrzeug dadurch gelöst, dass entlang dieses Luftberuhigungsraumabschnitts eine Drosselanordnung vorgesehen ist, die derart ausgebildet und angeordnet ist, dass ein Zuluftaustrittsvolumen durch die luftdurchlässige Innenraumdecke im Bereich des Luftberuhigungsraumabschnitts unterhalb der Luftverteileinrichtung an ein Zuluftaustrittsvolumen durch die luftdurchlässige Innendecke im Bereich seitlich an den Luftberuhigungsraumabschnitt angrenzender Luftberuhigungsraumabschnitte angeglichen ist.

Mit Hilfe der einzelnen Umlenkeinrichtung, welche einen Teil des ersten Anteils der Zuluft in Richtung auf die Luftverteileinrichtung umlenkt, wird insgesamt ein geeigneter Druckausgleich zwischen dem ersten Luftkanalabschnitt und dem zweiten Luftkanalabschnitt herbeigeführt. Für eine möglichst gleichmäßige Zuluftausströmung von dem Luftberuhigungsraum durch die Innendecke hindurch in den Fahrgastinnenraum sorgt die Drosselanordnung, mit deren Hilfe insbesondere im Bereich des Luftberuhigungsraums unterhalb der Luftverteileinrichtung ein geeigneter Gradient für die Strömungsgeschwindigkeit der Zuluft in Längsrichtung des Fahrzeugs einstellbar ist.

Die Umlenkeinrichtung zum Umlenken des Teils des ersten Anteils der Zuluft wird bevorzugt von einem gekrümmten Blech (Schöpfblech) gebildet. Dieses Blech kann insbesondere im Bereich einer der bodenseitigen Öffnungen des ersten Luftkanalabschnitts angeordnet sein und ragt typischerweise nach oben in den ersten Luftkanalabschnitt hinein, während sein unterer Abschnitt im darunter befindlichen Luftberuhigungsraum liegt.

Die Luftverteileinrichtung kann bevorzugt in einer Luftverteilbox angeordnet sein, die den Luftverteilabschnitt des Luftkanals bildet und an die der erste und der zweite Luftkanalabschnitt einander gegenüberliegend angeschlossen sind. Bei dieser Ausführungsform ist die Luftverteileinrichtung ein gesondertes Bauteil, welches in seinen Abmessungen an die angrenzenden Luftkanalabschnitte angepasst ist. Es ist jedoch auch möglich, dass der Luftkanal durchgehend ausgebildet ist und lediglich in seinem Luftverteilabschnitt eine beispielsweise aus Blechen oder Schaufeln aufgebaute Luftverteileinrichtung aufweist.

Die Drosselanordnung kann wenigstens ein Lochblech umfassen. Dadurch ergibt sich deren möglichst einfache Realisierung. Dieses Lochblech ist vorteilhafterweise auf einer Eintrittsseite des Luftberuhigungsraumabschnitts unterhalb des Luftverteilabschnitts des Luftkanals angeordnet. Eine genauere Einstellung des Gradienten für die Strömungsgeschwindigkeit der Zuluft, die sich unterhalb des Luftverteilabschnitts in dem Luftberuhigungsraum bewegt, wird möglich, wenn ein weiteres, auf einer Austrittseite des Luftberuhigungsraumabschnitts unterhalb des Luftverteilabschnitts des Luftkanals angeordnetes Lochblech zum Einstellen des unterhalb des Luftverteilabschnitts entlang strömenden Luftvolumens vorgesehen ist.

Es ist hervorzuheben, dass die Dimensionierung der verschiedenen Lochbleche durchaus verschieden sein kann. Insgesamt ist für eine möglichst gleichmäßige Luftausströmung durch die luftdurchlässige Innendecke, die als Lochdecke vorliegen kann, dadurch erzielbar, dass ein empirisch ermittelter, geeigneter Anteil an Zuluft aus dem ersten Luftkanalabschnitt ausgekoppelt und in seine Gegenrichtung umgelenkt wird. Abhängig von den sich ergebenden Strömungsgeschwindigkeiten im Luftberuhigungsraum unterhalb des Verteilabschnitts des Luftkanals sind dann angepasst ausgebildete einzelne Drosseleinrichtungen vorzusehen, die sämtlich als Lochbleche vorliegen können.

Ein Ausführungsbeispiel der Erfindung wird nachfolgend unter Bezugnahme auf die Zeichnung noch näher erläutert. Es zeigen:
- Figur 1: eine schematische, vertikale Längsschnittansicht einer Klimaanordnung eines Fahrzeugs und
- Figur 2: eine Ansicht von oben auf ein Lochblech, das bei der der Klimaanordnung nach Figur 1 einsetzbar ist.

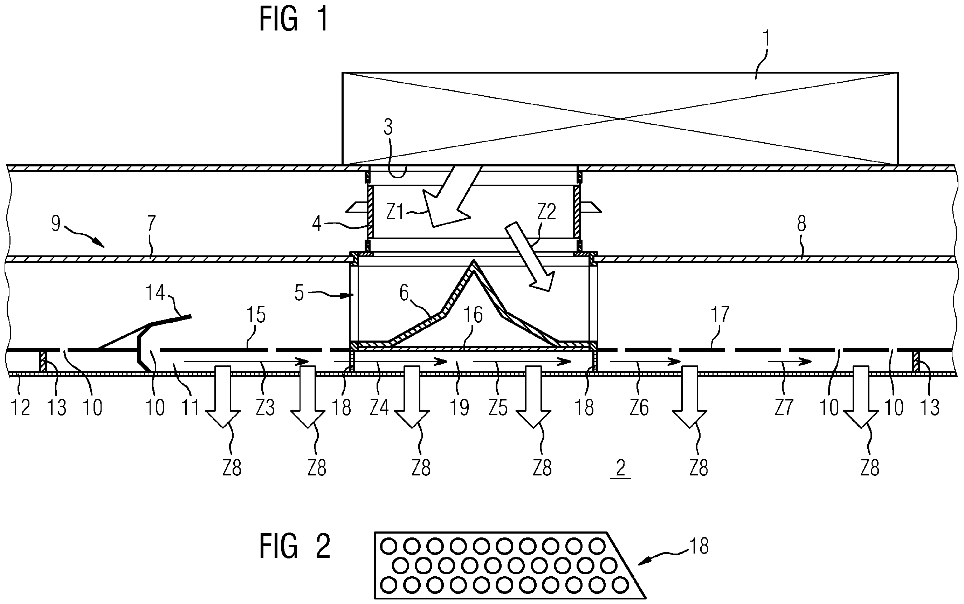

In Figur 1 ist eine Klimaanordnung veranschaulicht, wie sie beispielsweise bei einem Schienenfahrzeug für Personenverkehr zum Einsatz kommen kann. Ein Klimagerät 1, das beispielsweise auf einem Dach des Schienenfahrzeugs montiert sein kann, stellt konditionierte Zuluft bereit, die über eine Innendeckenfläche möglichst gleichmäßig in einen Fahrgastinnenraum 2 des Schienenfahrzeugs verbracht werden soll. Das Klimagerät 1 verfügt über einen Zuluftauslass 3, an den ein Zwischenkanalstück 4 angeschlossen ist. Die Einströmung der Zuluft von dem Klimagerät 1 aus in das Zwischenkanalstück 4 ist dabei insbesondere in Längsrichtung des Fahrzeugs über den Querschnitt des Zwischenkanalstücks 4 ungleichmäßig, wie in Figur 1 anhand der Pfeile Z1, Z2 veranschaulicht ist.

Auf einer Unterseite des Zwischenstücks 4 schließt sich eine Luftverteilbox 5 an, in der eine Luftverteileinrichtung 6 angeordnet ist.

In dem schematischen vertikalen Längsschnitt von Figur 1 ist erkennbar, dass ein erster Anteil der Zuluft, dessen Hauptströmungsrichtung und Luftvolumen mit dem Pfeil Z1 wiedergegeben ist, in einen ersten Luftkanalabschnitt 7 umgelenkt wird, während ein volumenmäßig kleiner dimensionierter Zuluftstrom, der von dem Pfeil Z2 veranschaulicht wird, in einen zweiten Luftkanalabschnitt 8 einströmt. Dabei ist die Luftverteilbox 5 horizontal zwischen die beiden Luftkanalabschnitte 7, 8 gesetzt, wobei zugeordnete Enden der Luftkanalabschnitte 7 und 8 luftdicht an seitliche Öffnungen der Luftverteilbox 5 angeschlossen sind.

Die Luftverteileinrichtung 6 bewirkt sowohl für den ersten Anteil der Zuluft (Z1) als auch für den zweiten Anteil der Zuluft (Z2) ein Umlenkung um etwa 90°, so dass diese beiden Zuluftanteile in entgegengesetzten Richtungen entlang eines Luftkanals 9 strömen, zudem die Luftkanalabschnitte 7, 8 sowie die Luftverteilbox 5 gehören und der sich über eine gesamte Länge des Schienenfahrzeugs erstrecken kann.

Der Boden der Luftverteilbox 5 ist luftdicht verschlossen. Demgegenüber weisen der erste Luftkanalabschnitt 7 sowie der zweite Luftkanalabschnitt 8 bodenseitige Öffnungen 10 auf (von denen aus Übersichtlichkeitsgründen in Fig. 1 nur einige mit Bezugszeichen versehen sind), über die aus den Luftkanalabschnitten 7, 8 stammende Zuluft in einen Luftberuhigungsraum 11 gelangt, der sich unmittelbar unterhalb des Luftkanals 9 erstreckt, insbesondere auch entlang einer Unterseite der Luftverteilbox 5. In dem Luftberuhigungsraum 11 entspannte Zuluft gelangt über eine Lochdecke 12 in den Fahrgastinnenraum 2 des Schienenfahrzeugs.

Der Luftberuhigungsraum 11 ist segmentartig ausgebildet und weist im vorliegenden Ausführungsbeispiel jeweils in einem gleichen horizontalen Abstand zu der Luftverteilbox 5 luftdichte Schottbleche 13 auf.

Von dem durch die Schottbleche 13 in Längsrichtung des Schienenfahrzeugs begrenzten Luftberuhigungsraum 11 aus soll nun Zuluft in der Fläche möglichst gleichmäßig in den Fahrgastinnenraum 12 eingeleitet werden. Zu diesem Zweck ist im Bereich einer bestimmten Öffnung 10 eine - bezogen auf den Abschnitt des Luftberuhigungsraums 11 zwischen den Schottblechen 13 - einzelne, im Wesentlichen gleichförmig nach innen gekrümmte Umlenkeinrichtung 14 (Schöpfblech) in einem Boden 15 des ersten Luftkanalabschnitts 9 angeordnet. Diese ragt nach oben in den Luftkanalabschnitt 7 hinein und lenkt einen Teil des in den ersten Luftkanalabschnitt 7 eingeströmten ersten Anteils der Zuluft in Gegenrichtung/in Richtung zu der Luftverteilbox 5 um. Dabei passiert der ausgekoppelte Teil des ersten Anteils der Zuluft zunächst die ausgewählte Öffnung 10 und gelangt somit in den Luftberuhigungsraum 11, wonach dieser Zuluftanteil in Längsrichtung des Luftberuhigungsraums 11 strömt, und zwar zunächst unterhalb eines Bodens 15 des ersten Luftkanalabschnitts 7, sodann unterhalb eines Bodens 16 der Luftverteilbox 5 und zuletzt unterhalb eines Bodens 17 des zweiten Luftkanalabschnitts 8. In dieser Strömungsrichtung des ausgekoppelten/umgelenkten Teils des ersten Anteils der Zuluft nimmt dessen Strömungsgeschwindigkeit immer weiter ab, wie anhand der Pfeile Z3,..., Z7 in Figur 1 veranschaulicht ist.

Ein gewünschter Gradient für die Abnahme der Strömungsgeschwindigkeit in dem Luftberuhigungsraum 11 von der Umlenkeinrichtung 14 aus bis zum gegenüberliegenden Schottblech 13 wird durch zwei vertikale Lochbleche 18 eingestellt, von denen eines an einer Eintrittsseite eines Luftberuhigungsraumabschnitts 19 unterhalb der Luftverteilbox 5 und das andere auf einer Austrittsseite dieses Luftberuhigungsraumabschnitts 19 liegt.

Ein Beispiel für eines der Lochbleche 18 ist in Figur 2 dargestellt. Es ist zu beachten, dass die Größe und die Form der Öffnungen der Lochbleche 18 untereinander variieren können. Im Wesentlichen kommt es darauf an, von der Umlenkeinrichtung 14 aus, eine geeignete Abnahme der Strömungsgeschwindigkeit für die Zuluft in diesem Bereich zu erzielen, so dass eine über die Fläche der Lochdecke 12 gleichmäßige Zuluftausblasung erfolgt. Die Lochdecke 12 ist wenigstens zwischen den Schottblechen 13 gleichförmig mit Durchlasslöchern für die Zuluft ausgestattet.

Ergebnis ist eine Zuluftausblasung in den Fahrgastinnenraum 2, wie sie anhand der Pfeile Z8 in Figur 1 veranschaulicht ist.

## Patentansprüche

1. Fahrzeug mit einer Klimaanordnung, umfassend:
- ein Klimagerät (1), das konditionierte Zuluft für einen Fahrzeuginnenraum bereitstellt,
- einen horizontal in Längsrichtung des Fahrzeugs verlaufenden Luftkanal (9),
- eine strömungstechnisch mit einem Zuluftauslass (3) des Klimagerätes (1) verbundene und in einem Luftverteilabschnitt des Luftkanals (9) vorgesehene Luftverteileinrichtung (6), welche die von dem Klimagerät (1) bereitgestellte Zuluft derart in den Luftkanal (9) umlenkt, dass in einem ersten Luftkanalabschnitt (7) ein erster Anteil der Zuluft in eine erste Strömungsrichtung und in einem zweiten Luftkanalabschnitt (8) ein zweiter Anteil der Zuluft, der hinsichtlich seines Volumens kleiner als der erste Anteil an Zuluft ist, in eine der ersten Strömungsrichtung entgegengesetzte zweite Strömungsrichtung geführt ist,
- einen sich im Bereich der Luftverteileinrichtung (6) unterhalb und längs des Luftkanals (9) erstreckenden und mit dem Luftkanal (9) über bodenseitige Öffnungen (10) des Luftkanals (9) strömungstechnisch verbundenen Luftberuhigungsraum (11), der auf seiner Unterseite zu einem Fahrzeuginnenraum (2) von einer luftdurchlässigen Innenraumdecke (12) begrenzt ist, und
- im Bereich des ersten Luftkanalabschnitts (7, 8) eine einzelne Umlenkeinrichtung (14) angeordnet ist, welche einen Teil des ersten Anteils der Zuluft in Gegenrichtung derart umlenkt, dass der umgelenkte Teil des ersten Anteils der Zuluft in einem Luftberuhigungsraumabschnitt (19) unterhalb der Luftverteileinrichtung (6) entlang strömt,
**dadurch gekennzeichnet, dass**
entlang dieses Luftberuhigungsraumabschnitts (19) eine Drosselanordnung vorgesehen ist, die derart ausgebildet und angeordnet ist, dass ein Zuluftaustrittsvolumen durch die luftdurchlässige Innenraumdecke (12) im Bereich des Luftberuhigungsraumabschnitts (19) unterhalb der Luftverteileinrichtung an ein Zuluftaustrittsvolumen durch die luftdurchlässige Innendecke im Bereich seitlich an den Luftberuhigungsraumabschnitt (19) angrenzender Luftberuhigungsraumabschnitte angeglichen ist.

2. Fahrzeug nach Anspruch 1,
**dadurch gekennzeichnet, dass**
die Umlenkeinrichtung (14) zum Umlenken des Teils des ersten Anteils der Zuluft von einem nach innen gekrümmten Blech gebildet und im Bereich einer der bodenseitigen Öffnungen (10) des Luftkanalabschnitts (7) angeordnet ist.

3. Fahrzeug nach einem der Ansprüche 1 oder 2,
**dadurch gekennzeichnet, dass**
die Luftverteileinrichtung (6) in einer Luftverteilbox (5) angeordnet ist, die den Luftverteilabschnitt des Luftkanals (9) bildet und an die der erste und der zweite Luftkanalabschnitt (7, 8) einander gegenüberliegend angeschlossen sind.

4. Fahrzeug nach einem der Ansprüche 1 bis 3,
**dadurch gekennzeichnet, dass**
die Drosselanordnung wenigstens ein Lochblech (18) umfasst.

5. Fahrzeug nach Anspruch 4,
**dadurch gekennzeichnet, dass**
das Lochblech (18) auf einer Eintrittsseite des Luftberuhigungsraumabschnitts (19) unterhalb des Luftverteilabschnitts des Luftkanals (9) angeordnet ist.

6. Fahrzeug nach Anspruch 5,
**dadurch gekennzeichnet, dass**
ein weiteres, auf einer Austrittsseite des Luftberuhigungsraumabschnitts (19) unterhalb des Luftverteilabschnitts des Luftkanals (9) angeordnetes Lochblech (18) zum Einstellen des unterhalb des Luftverteilabschnitts entlang strömenden Luftvolumens vorgesehen ist.

## Claims

1. Vehicle having an air-conditioning arrangement, comprising:
- an air conditioner (1) which provides conditioned supply air for a vehicle interior,
- an air duct (9) running horizontally in the longitudinal direction of the vehicle,
- an air distribution device (6) which is connected in terms of flow to a supply air outlet (3) of the air conditioner (1) and is provided in an air distribution segment of the air duct (9) and which deflects the supply air provided by the air conditioner (1) into the air duct (9) in such a manner that, in a first air duct segment (7), a first portion of the supply air is guided in a first flow direction and, in a second air duct segment (8), a second portion of the supply air that is smaller in respect of its volume than the first portion of supply air, is guided in a second flow direction opposite the first flow direction,
- an air-calming chamber (11) which extends in the region of the air distribution device (6) below and along the air duct (9) and is connected in terms of flow to the air duct (9) via bottom-side openings (10) of the air duct (9) and which is bounded on its lower side towards a vehicle interior (2) by an air-permeable interior ceiling (12), and
- an individual deflecting device (14) is arranged in the region of the first air duct segment (7, 8), the deflecting device deflecting part of the first portion of the supply air in the opposite direction in such a manner that the deflected part of the first portion of the supply air flows along below the air distribution device (6) in an air-calming-chamber segment (19), **characterized in that**
a throttle arrangement is provided along said air-calming-chamber segment (19), the throttle arrangement being designed and arranged in such a manner that a supply air outlet volume through the air-permeable interior ceiling (12) in the region of the air-calming-chamber segment (19) below the air distribution device is matched to a supply air outlet volume through the air-permeable interior ceiling in the region of air-calming-chamber segments laterally adjacent to the air-calming-chamber segment (19) .

2. Vehicle according to Claim 1,
**characterized in that**
the deflecting device (14) for deflecting part of the first portion of supply air is formed by an inwardly curved metal sheet and is arranged in the region of one of the bottom-side openings (10) of the air duct segment (7).

3. Vehicle according to either of Claims 1 and 2,
**characterized in that**
the air distribution device (6) is arranged in an air distribution box (5) which forms the air distribution segment of the air duct (9) and to which the first and the second air duct segments (7, 8) are connected opposite each other.

4. Vehicle according to one of Claims 1 to 3,
**characterized in that**
the throttle arrangement comprises at least one perforated plate (18) .

5. Vehicle according to Claim 4,
**characterized in that**
the perforated plate (18) is arranged on an inlet side of the air-calming-chamber segment (19) below the air distribution segment of the air duct (9).

6. Vehicle according to Claim 5,
**characterized in that**
a further perforated plate (18) which is arranged on an outlet side of the air-calming-chamber segment (19) below the air distribution segment of the air duct (9) and is intended for adjusting the air volume flowing along below the air distribution segment is provided.

## Revendications

1. Véhicule ayant un système de conditionnement d'air, comprenant :
- un appareil (1) de conditionnement d'air, qui procure de l'air d'arrivée conditionné à un espace intérieur du véhicule,
- un conduit (9) pour de l'air s'étendant horizontalement dans la direction longitudinale du véhicule,
- un dispositif (16) de répartition d'air communiquant en technique d'écoulement avec une sortie d'air d'arrivée de l'appareil (1) de conditionnement d'air et prévu dans un tronçon de répartition d'air du conduit (9) pour de l'air, dispositif (6) qui dévie dans le conduit (9) pour de l'air, l'air d'arrivée procuré par l'appareil (1) de conditionnement d'air de manière à conduire dans un premier tronçon (7) du conduit pour de l'air une première proportion de l'air d'arrivée dans un premier sens d'écoulement et dans un deuxième tronçon (8) du conduit pour de l'air une deuxième proportion de l'air d'arrivée , qui du point de vue de son volume est plus petite que la première proportion d'air d'arrivée , dans un deuxième sens d'écoulement contraire au premier sens d'écoulement,
- un espace (11) de tranquillisation de l'air s'étendant dans la partie du dispositif (6) de répartition de l'air en-dessous et le long du conduit (9) pour de l'air et communiquant en technique d'écoulement avec le conduit (9) pour de l'air par des ouvertures (10) du côté du fond du conduit pour de l'air, espace (11) qui est délimité sur son côté inférieur vers un espace (2) intérieur du véhicule par un recouvrement (12) de l'espace intérieur perméable à l'air et
- dans la partie du premier tronçon (7, 8) du conduit pour de l'air est disposé un dispositif (14) unique de déviation, qui dévie une partie de la première proportion de l'air d'arrivée en sens contraire de manière à ce que la partie déviée de la première proportion de l'air d'arrivée passe dans une partie (19) de l'espace de tranquillisation de l'air en-dessous du dispositif (6) de répartition de l'air,
**caractérisé en ce que**
il est prévu le long de cette partie (19) de tranquillisation de l'air un agencement d'étranglement, qui est constitué et disposé de manière à ce qu'un volume de sortie de l'air d'arrivée à travers le recouvrement (12) de l'espace intérieur perméable à l'air soit, dans la région de la partie (19) de l'espace de tranquillisation en-dessous du dispositif de répartition de l'air, rendu égal à un volume de sortie de l'air d'arrivée à travers le recouvrement intérieur perméable à l'air dans la région de parties de l'espace de tranquillisation de l'air voisines latéralement de la partie (19) de l'espace de tranquillisation de l'air.

2. Véhicule suivant la revendication 1,
**caractérisé en ce que**
le dispositif (14) de déviation est formé pour la déviation de la partie de la première proportion de l'air d'arrivée par une tôle incurvée vers l'intérieur et est disposé dans la région de l'une des ouvertures (10) du côté du fond du tronçon (7) du conduit pour de l'air.

3. Véhicule suivant l'une des revendications 1 ou 2,
**caractérisé en ce que**
le dispositif (6) de répartition d'air est disposé dans une boîte (5) de répartition de l'air, qui forme la partie de répartition de l'air du conduit (9) pour de l'air et à laquelle le premier et le deuxième tronçons (7, 8) du conduit pour de l'air sont raccordés en étant opposés l'un à l'autre.

4. Véhicule suivant l'une des revendications 1 à 3,
**caractérisé en ce que**
l'agencement d'étranglement comprend au moins une tôle (18) perforée.

5. Véhicule suivant la revendication 4,
**caractérisé en ce que**
la tôle (18) perforée est montée sur un côté d'arrivée de la partie (19) de l'espace de tranquillisation de l'air en-dessous de la partie de répartition de l'air du conduit (9) pour de l'air.

6. Véhicule suivant la revendication 5,
**caractérisé en ce**
**qu'**il est prévu, pour le réglage du volume de l'air passant en-dessous de la partie de répartition de l'air, une autre tôle (18) perforée montée sur un côté de sortie de la partie (19) de l'espace de tranquillisation de l'air en-dessous de la partie de répartition de l'air du conduit (9) pour de l'air.
